# EUROPÄISCHE PATENTSCHRIFT

(11) **EP 1 922 537 B1**
(45) Veröffentlichungstag und Bekanntmachung des Hinweises auf die Patenterteilung: **21.10.2009**
(21) Anmeldenummer: 06791338.4
(22) Anmeldetag: 31.08.2006
(51) Int. Cl.: G01M 7/02, G01B 11/16, G01H 9/00

(54) **VERFAHREN ZUR BESTIMMUNG DER DEHNUNGSVERTEILUNG AN BAUTEILEN**
METHOD FOR DETERMINATION OF STRAIN DISTRIBUTION IN COMPONENTS
PROCEDE POUR DETERMINER LA REPARTITION DES DEFORMATIONS DANS DES COMPOSANTS

(30) Priorität: 09.09.2005 DE 102005042820
(43) Veröffentlichungstag der Anmeldung: 21.05.2008
(73) Patentinhaber: MTU Aero Engines GmbH, 80995 München (DE)
(72) Erfinder: MEITZNER, Robert, 85757 Karlsfeld (DE)
(86) Internationale Anmeldenummer: PCT/DE2006/001532
(87) Internationale Veröffentlichungsnummer: WO 2007/028360

(56) Entgegenhaltungen:
- US-A- 4 969 106
- MALLET L; LEE B C; STASZEWSKI W J; SCARPA F: "Structural health monitoring using scanning laser vibrometry: II. Lamb waves for damage detection" SMART MATERIALS AND STRUCTURES APRIL 2004 IOP PUBLISHING UK, Bd. 13, Nr. 2, 2. April 2004 (2004-04-02), Seiten 261-269, XP002413153
- CHEN S-E; VENKATAPPA S; PETRO S H; GANGARAO H V S: "Damage detection using scanning laser vibrometer" PROCEEDINGS OF THE SPIE - THE INTERNATIONAL SOCIETY FOR OPTICAL ENGINEERING, Bd. 3411, 1998, Seiten 473-484, XP002413154 USA
- SHEN-EN CHEN; VENKATAPPA S; MOODY J; PETRO A; GANGARAO H: "A novel damage detection technique using scanning laser" MATERIALS EVALUATION, AMERICAN SOC. NONDESTRUCTIVE TEST, Bd. 58, Nr. 12, Dezember 2000 (2000-12), Seiten 1389-1394, XP001248572 USA

## Beschreibung

Die Erfindung betrifft ein Verfahren zur Bestimmung der Dehnungsverteilung an Bauteilen, insbesondere an Gasturbinenbauteilen.

Soll für ein Bauteil eine Dehnungsverteilung bestimmt werden, so wird hierzu nach dem Stand der Technik entweder rein experimentell oder rein analytisch vorgegangen. Als aus dem Stand der Technik bekannte experimentelle Vorgehensweise zur Bestimmung der Dehnungsverteilung eines Bauteils sei die Verwendung von Dehnmessstreifen genannt, die auf dem Bauteil positioniert werden und bei Schwingungsanregung des Bauteils Messwerte über die Dehnungsverteilung bereitstellen. Mit solchen Dehnmessstreifen können jedoch lediglich einige wenige lokale Messwerte für die Dehnungsverteilung eines Bauteils gewonnen werden. Als aus dem Stand der Technik bekannte analytische Vorgehensweise zur Bestimmung der Dehnungsverteilung eines Bauteils sei auf die Finite-Elemente-Methode verwiesen, die eine rein rechnerische Ermittlung der Dehnungsverteilung darstellt und reale Bauteilgeometrien unberücksichtigt lässt.

Aus MALLET L et al.: "Structural health monitoring using scanning laser vibrometry: II. Lamb waves for damage detection" (Smart Mater. Struct. 13(2004) 261-269) ist ein Verfahren zur Bestimmung der Dehnungsverteilung an Bauteilen bekannt, wobei eine Schwingungsanregung des Bauteils erfolgt sowie das messtechnische Erlassen einer Schwingwegverteilung des Bauteils für eine Vielzahl von Messpunkten im dreidimensionalen Raum mit Hilfe eines Scanning-Laser-Vibrometers mit einer Glättung der erfassten Schwingwegverteilung, und wobei die erfassten Messpunkte ein Raster über den Bauteil bilden. Die strukturelle Integrität eines Bauteils wird mittels eines Scanning-Laser-Vibrometers zur Schadensdetektion überwacht. Ein lokaler Amplitudenanstieg wird als Indikator für eine Beschädigung angesehen. Aus Chen et al.: "Damage detection using scanning laser vibrometer" (SPIE Vol. 3411 473-484) und Chen et al.: "A NOVEL DAMAGE DETECTION TECHNIQUE USING SCANNING LASER VIBROMETRY AND A STRAIN ENERGY DISTRIBUTION METHOD" (Materials Evaluation, December 2000, 1389-1394) ist ein Scanning-Laser-vibrometer bekannt, wobei die Dehnungsverteilung eines Bauteils dadurch gewonnen wird, dass für jeden Messpunkt zunächst die zweite Ableitung der Vibrationsmodenform als deren Krümmung gewonnen wird, und anschließend die Fläche unter dieser Krümmung integriert wird. Dabei sind alle Schwingungsmoden des Bauteils zu berücksichtigen.
US 4,969,106 offenbart dass die Dehnungsverteilung in einem Bauteil bestimmt wird durch die Projektion eines Messgitters auf ein deformiertes Bauteil mittels eines Triangulationsverfahrens.

Hiervon ausgehend liegt der vorliegenden Erfindung das Problem zu Grunde, ein neuartiges Verfahren zur Bestimmung der Dehnungsverteilung an Bauteilen, insbesondere an Gasturbinenbauteilen, zu schaffen.

Dieses Problem wird durch ein Verfahren zur Bestimmung der Dehnungsverteilung an Bauteilen, insbesondere an Gasturbinenbauteilen, gemäß Anspruch 1 gelöst. Erfindungsgemäß umfasst das Verfahren zumindest die folgenden Schritte: a) Bereitstellen eines Bauteils, dessen Dehnungsverteilung zu bestimmen ist; b) Schwingungsanregung des Bauteils und messtechnisches Erfassen einer Schwingwegverteilung des Bauteils für eine Vielzahl von Messpunkten mit Hilfe eines Vibrometers, wobei jeder Messpunkt durch drei Koordinaten bestimmt wird, und wobei die gemessene Schwingwegverteilung jedes Messpunkts eine vektorielle Größe ist; c) Glätten der für jeden Messpunkt messtechnisch erfassten Schwingwegverteilung; d) Definieren von vieleckigen Elementen, wobei jeder Messpunkt einen Eckpunkt mindestens eines Elements bildet; e) Errechnen eines tensoriellen Dehnungszustands für jedes der vieleckigen Elemente aus den in den Eckpunkten der Elemente vorliegenden, vektoriellen Schwingwegverteilungen; f) Errechnung der Dehnungsverteilung in den Eckpunkten der Elemente aus den Dehnungszuständen der Elemente.

Das erfindungsgemäße Verfahren zur Bestimmung der Dehnungsverteilung eines Bauteils stellt eine Kombination aus experimenteller und analytischer Vorgehensweise dar. Mit Hilfe eines Vibrometers werden an einem realen Bauteil und demnach unter Berücksichtigung der realen Bauteilgeometrie Schwingwegverteilungen, vorzugsweise für verschiedene Moden des Bauteils gemessen. Aus diesen experimentellen Messdaten wird dann durch analytische Berechnung die Dehnungsverteilung des Bauteils in Form eines tensoriellen, insbesondere vektoriellen, Dehnungszustandes ermittelt. Dies stellt eine völlig neue Vorgehensweise zur Bestimmung der Dehnungsverteilung an Bauteilen dar.

Nach einer vorteilhaften Weiterbildung der Erfindung werden die Messpunkte in Bauteilbereichen mit höheren Dehnungsgradienten mit einem geringeren Abstand über das Bauteil verteilt als in Bauteilbereichen mit geringeren Dehnungsgradienten, wobei hierzu die Verteilung der Messpunkte über das Bauteil iterativ durchgeführt wird.

Vorzugsweise wird das Glätten der für jeden Messpunkt messtechnisch erfassten Schwingwegverteilung mit Hilfe einer kubischen Spline-Glättung durchgeführt.

Nach einer weiteren vorteilhaften Weiterbildung der Erfindung werden zur Errechnung der Dehnungsverteilung die tensoriellen Dehnungszustände der Elemente, die in einem lokalen Koordinatensystem des jeweiligen Elements vorliegen, durch eine Transformation auf die Hauptachsen des lokalen Koordinatensystems des jeweiligen Elements in skalare Hauptdehnungen umgewandelt, wobei weiterhin zur Errechnung der Dehnungsverteilung für die Eckpunkte der Elemente die skaleren Hauptdehnungen in den jeweiligen Eckpunkten gemittelt werden, wobei sich als Ergebnis eine skalare Dehnungsverteilung für die Eckpunkte der Elemente ergibt. Alternativ werden zur Errechnung der Dehnungsverteilung die tensoriellen Dehnungszustände der Elemente, die in einem lokalen Koordinatensystem des jeweiligen Elements vorliegen, in ein globales Koordinatensystems transformiert, wobei weiterhin zur Errechnung der Dehnungsverteilung für die Eckpunkte der Elemente die transformierten, tensoriellen Dehnungszustände in den jeweiligen Eckpunkten gemittelt werden, wobei sich als Ergebnis eine tensorielle Dehnungsverteilung für die Eckpunkte der Elemente ergibt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, nachfolgend näher erläutert.

Die hier vorliegende Erfindung betrifft ein Verfahren zur Bestimmung der Dehnungsverteilung an Bauteilen, insbesondere an Gasturbinenbauteilen, wobei die Erfindung experimentelle Verfahrensschritte mit analytischen Verfahrensschritten kombiniert. Hierdurch ist es möglich, eine exakte Dehnungsverteilung unter Berücksichtigung realer Bauteilgeometrien zu ermitteln.

In einem ersten Schritt des erfindungsgemäßen Verfahrens wird ein Bauteil, dessen Dehnungsverteilung zu bestimmen ist, bereitgestellt.

In einem zweiten Schritt des erfindungsgemäßen Verfahrens wird das bereitgestellte Bauteil zu Schwingungen angeregt, wobei mit Hilfe eines Vibrometers, nämlich eines 3D-Scanning-Vibrometers, die Schwingwegverteilung für eine Vielzahl von Messpunkten des Bauteils gemessen und damit experimentell ermittelt wird. Die für jeden Messpunkt des Bauteils gemessene Schwingwegverteilung ist eine tensorielle Größe, die vorzugsweise für verschieden Moden des Bauteils gemessen bzw. ermittelt wird.

Bei der experimentellen Ermittlung der Schwingwegverteilung für die Messpunkte des Bauteils kann so vorgegangen werden, dass die Messpunkte äquidistant über das Bauteil verteilt werden. Alternativ ist es auch möglich, die Messpunkte in Bauteilbereichen mit höheren Dehnungsgradienten mit einem geringerem Abstand über das Bauteil zu verteilen als in Bauteilbereichen mit geringen Dehnungsgradienten, wobei hierzu die Verteilung der Messpunkte über das Bauteil dann vorzugsweise iterativ durchgeführt wird. In jedem Fall werden die Messpunkte durch drei Koordinaten bestimmt, wobei die für jeden dreidimensionalen Messpunkt gemessene Schwingwegverteilung ebenfalls eine dreidimensionale, tensorielle Größe ist.

Im Zusammenhang mit der experimentellen, messtechnischen Erfassung der Schwingwegverteilung für jeden Messpunkt des Bauteils mit Hilfe des 3D-Scanning-Vibrometers sei angemerkt, dass das 3D-Scanning-Vibrometer derart angeordnet werden sollte, dass insbesondere die sogenannten in-plane Komponenten als auch sogenannte out-plane Komponenten der Schwingwegverteilung gut aufgelöst werden können. Der Dynamikbereich des 3D-Scanning-Vibrometers sollte möglichst vollständig ausgenutzt werden, gegebenenfalls wird der Empfindlichkeitsbereich des 3D-Scanning-Vibrometers automatisch an die lokalen Schwingungen in den jeweiligen Messpunkten angepasst.

Nach der experimentellen Ermittlung der Schwingwegverteilung in den Messpunkten des Bauteils werden in einem dritten Schritt des erfindungsgemäßen Verfahrens die messtechnisch erfassten, tensoriellen Schwingwegverteilungen geglättet. Die Glättung erfolgt dabei mit Hilfe sogenannter Spline-Glättungsverfahren, vorzugsweise mit Hilfe einer kubischen Spline-Glättung.

In einem weiteren Schritt des erfindungsgemäßen Verfahrens werden unter Verwendung der Messpunkte vieleckige Elemente, vorzugsweise Dreieckelemente, definiert. Jeder Messpunkt bildet dabei einen Eckpunkt mindestens eines solchen Dreieckelements.

Im Anschluss an die Definition der Dreieckelemente wird aus den geglätteten, vektoriellen Schwingwegverteilungen, die in den Eckpunkten der Dreieckelemente vorliegen, für jedes der Dreieckelemente ein tensorieller Dehnungszustand errechnet. Dieser tensorielle Dehnungszustand wird dabei im lokalen Koordinatensystem des jeweiligen Dreieckelements ermittelt.

Im Anschluss an die Errechnung der in den lokalen Koordinatensystemen vorliegenden, tensoriellen Dehnungszustände für die Dreieckelemente erfolgt die Errechnung der Dehnungsverteilung in den Eckpunkten der Dreieckelemente aus den Dehnungszuständen derselben.

Hierzu wird nach einer bevorzugten Ausführungsform der hier vorliegenden Erfindung so vorgegangen, dass zuerst die tensoriellen Dehnungszustände der Dreieckelemente, die im jeweiligen lokalen Koordinatensystem des jeweiligen Dreickelements vorliegen, durch eine Transformation auf die Hauptachsen des jeweiligen lokalen Koordinatensystems in skalare Hauptdehnungen umgewandelt werden. Hierbei wird für jedes Dreieckelement eine maximale Hauptdehnung sowie eine minimale Hauptdehnung ermittelt, wobei es sich bei den Hauptdehnungen um skalare Größen handelt. Darauffolgend wird aus diesen skalaren Hauptdehnungen der Dreieckelemente eine skalare Dehnungsverteilung für die Eckpunkte der Dreieckelemente und damit für alle Messpunkte des Bauteils ermittelt, wobei hierzu für jeden Eckpunkt und damit Messpunkt die skalaren Hauptdehnungen, nämlich einerseits die maximalen Hauptdehnungen und andererseits die minimalen Hauptdehnungen, der Dreieckelemente gemittelt werden, die unter Verwendung des jeweiligen Eckpunkts gebildet sind bzw. die im jeweiligen Eckpunkt aneinandergrenzen bzw. aneinanderstoßen.

Für jeden Eckpunkt bzw. Messpunkt wird demnach eine gemittelte maximale Hauptdehnung sowie eine gemittelte minimale Hauptdehnung errechnet, wobei diese gemittelten skalaren Hauptdehnungen die skalare Dehnungsverteilung für das Bauteil bestimmen. Durch die Transformation der in den lokalen Koordinatensystemen der jeweiligen Dreieckelemente vorliegenden, tensoriellen Dehnungszustände in skalare Hauptdehnungen kann der Rechenaufwand für die Ermittlung bzw. Errechnung der Dehnungsverteilung minimiert werden.

Nach einer Alternative der Erfindung werden zur Errechnung der Dehnungsverteilung die tensoriellen Dehnungszustände der Elemente, die in den jeweiligen lokalen Koordinatensystemen der jeweiligen Dreieckelemente vorliegen, in ein globales Koordinatensystem transformiert. Nach Transformation aller tensoriellen Dehnungszustände der Dreieckelemente in das globale Koordinatensystem werden dann zur Errechnung einer tensoriellen Dehnungsverteilung für die Eckpunkte der Dreieckelemente bzw. für die Messpunkte des Bauteils die transformierten, tensoriellen Dehnungszustände in den jeweiligen Eckpunkten gemittelt. In jedem Eckpunkt bzw. Messpunkt werden dabei die tensoriellen Dehnungszustände der Dreieckelemente gemittelt, welche durch den jeweiligen Eckpunkt bzw. Messpunkt bestimmt sind bzw. im jeweiligen Eckpunkt aneinandergrenzen.

Es sei darauf hingewiesen, dass die mit Hilfe des erfindungsgemäßen Verfahrens ermittelte Dehnungsverteilung auch in eine Spannungsverteilung umgerechnet werden kann. Hierzu wird die tensorielle Dehnungsverteilung lediglich mit dem Spannungs-Dehnungs-Tensor verrechnet.

## Patentansprüche

1. Verfahren zur Bestimmung der Dehnungsverteilung an Bauteilen, insbesondere an Gasturbinenbauteilen, mit folgenden Schritten:
a) Bereitstellen eines Bauteils, dessen Dehnungsverteilung zu bestimmen ist;
b) Schwingungsanregung des Bauteils und messtechnisches Erfassen einer Schwingwegverteilung des Bauteils für eine Vielzahl von Messpunkten mit Hilfe eines Vibrometers, wobei jeder Messpunkt durch drei Koordinaten bestimmt wird, und wobei die gemessene Schwingwegverteilung jedes Messpunkts eine vektorielle Größe ist;
c) Glätten der für jeden Messpunkt messtechnisch erfassten Schwingwegverteilung;
d) Definieren von vieleckigen Elementen, wobei jeder Messpunkt einen Eckpunkt mindestens eines Elements bildet;
e) Errechnen eines tensoriellen Dehnungszustands für jedes der vieleckigen Elemente aus den in den Eckpunkten der Elemente vorliegenden, tensoriellen Schwingwegverteilungen;
f) Errechnung der Dehnungsverteilung in den Eckpunkten der Elemente aus den Dehnungszuständen der Elemente.

2. Verfahren nach Anspruch 1,
**dadurch gekennzeichnet,**
**dass** in Schritt b) die vectorielle Schwingwegverteilung in den Messpunkten mit Hilfe eines 3D-Scanning-Vibrometers ermittelt wird.

3. Verfahren nach Anspruch 1 oder 2,
**dadurch gekennzeichnet,**
**dass** in Schritt b) die Messpunkte äquidistant über das Bauteil verteilt werden.

4. Verfahren nach Anspruch 1 oder 2,
**dadurch gekennzeichnet,**
**dass** in Schritt b) die Messpunkte in Bauteilbereichen mit höheren Dehnungsgradienten mit einem geringeren Abstand über das Bauteil verteilt werden als in Bauteilbereichen mit geringeren Dehnungsgradienten, wobei hierzu die Verteilung der Messpunkte über das Bauteil iterativ durchgeführt wird.

5. Verfahren nach einem oder mehreren der Ansprüche 1 bis 4,
**dadurch gekennzeichnet,**
**dass** in Schritt c) das Glätten der für jeden Messpunkt messtechnisch erfassten Schwingwegverteilung mit Hilfe einer insbesondere kubischen Spline-Glättung durchgeführt wird.

6. Verfahren nach einem oder mehreren der Ansprüche 1 bis 5,
**dadurch gekennzeichnet,**
**dass** in Schritt d) dreieckige Elemente definiert werden.

7. Verfahren nach einem oder mehreren der Ansprüche 1 bis 6,
**dadurch gekennzeichnet,**
**dass** in Schritt e) der tensorielle Dehnungszustand jedes Elements im lokalen Koordinatensystem des jeweiligen Elements errechnet wird.

8. Verfahren nach einem oder mehreren der Ansprüche 1 bis 7,
**dadurch gekennzeichnet,**
**dass** in Schritt f) zur Errechnung der Dehnungsverteilung die tensoriellen Dehnungszustände der Elemente, die in einem lokalen Koordinatensystem des jeweiligen Elements vorliegen, durch eine Transformation auf die Hauptachsen des lokalen Koordinatensystems des jeweiligen Elements in skalare Hauptdehnungen umgewandelt werden, und dass weiterhin zur Errechnung der Dehnungsverteilung für die Eckpunkte der Elemente die skalaren Hauptdehnungen in den jeweiligen Eckpunkten gemittelt werden, wobei sich als Ergebnis eine skalare Dehnungsverteilung für die Eckpunkte der Elemente ergibt.

9. Verfahren nach einem oder mehreren der Ansprüche 1 bis 7,
**dadurch gekennzeichnet,**
**dass** in Schritt f) zur Errechnung der Dehnungsverteilung die tensoriellen Dehnungszustände der Elemente, die in einem lokalen Koordinatensystem des jeweiligen Elements vorliegen, in ein globales Koordinatensystems transformiert werden, und dass weiterhin zur Errechnung der Dehnungsverteilung für die Eckpunkte der Elemente die transformierten, tensoriellen Dehnungszustände in den jeweiligen Eckpunkten gemittelt werden, wobei sich als Ergebnis eine tensorielle Dehnungsverteilung für die Eckpunkte der Elemente ergibt.

## Claims

1. Method for determining strain distribution in components, in particular in gas turbine components, with the following steps:
a) provision of a component, the strain distribution of which is to be determined;
b) vibrational excitation of the component and recording by measurement of a vibrational amplitude distribution of the component for a plurality of measuring points by means of a vibrometer, wherein each measuring point is determined by three coordinates, and wherein the measured vibrational amplitude distribution of each measuring point is a vectorial parameter;
c) smoothing of the vibrational amplitude distribution recorded by measurement for each measuring point;
d) definition of polygonal elements, wherein each measuring point forms a corner of at least one element;
e) calculation of a tensorial strain condition for each of the polygonal elements from a tensorial vibrational amplitude distributions present in the corners of the elements;
f) calculation of the strain distribution in the corners of the elements from the strain conditions of the elements.

2. Method according to claim 1,
**characterised in that**
in step b) the vectorial vibrational amplitude distribution in the measuring points is determined with the help of a 3D scanning vibrometer.

3. Method according to claim 1 or 2,
**characterised in that**
in step b) the measuring points are distributed equidistantly over the component.

4. Method according to claim 1 or 2,
**characterised in that**
in step b) the measuring points in component regions with higher strain gradients are distributed over the component with a smaller distance than in component regions with lower strain gradients, wherein the distribution of the measuring points over the component is carried out iteratively for this.

5. Method according to one or several of claims 1 to 4,
**characterised in that**
in step c) the smoothing of the vibrational amplitude distribution recorded by measurement for each measuring point is performed with the help of cubic spline smoothing.

6. Method according to one or several of claims 1 to 5,
**characterised in that**
in step d) triangular elements are defined.

7. Method according to one or several of claims 1 to 6,
**characterised in that**
in step e) the tensorial strain condition of each element is calculated in the local coordinate system of the respective element.

8. Method according to one or several of claims 1 to 7,
**characterised in that**
in step f) for the calculation of the strain distribution, the tensorial strain conditions of the elements, which are present in a local coordinate system of the respective element, are converted by a transformation on the main axes of the local coordinate system of the respective element to scalar main strains, and that, furthermore, to calculate the strain distribution for the corners of the elements, the scalar main strains in the respective corners are averaged, wherein a scalar strain distribution results for the corners of the elements.

9. Method according to one or several of claims 1 to 7,
**characterised in that**
in step f) for the calculation of the strain distribution, the tensorial strain conditions of the elements, which are present in a local coordinate system of the respective element, are transformed to a global coordinate system, and that, furthermore, to calculate the strain distribution for the corners of the elements, the transformed, tensorial strain conditions in the respective corners are averaged, wherein a tensorial strain distribution results for the corners of the elements.

## Revendications

1. Procédé pour déterminer la répartition des déformations sur des composants, en particulier sur des composants de turbine à gaz, comprenant les étapes consistant à :
a) fournir un composant dont il convient de déterminer la répartition des déformations ;
b) exciter en oscillation le composant et détecter de façon métrologique une répartition des élongations de l'oscillation du composant pour une pluralité de points de mesure à l'aide d'un vibromètre, chaque point de mesure étant déterminé par trois coordonnées, et la répartition des élongations de l'oscillation mesurée de chaque point de mesure étant une grandeur vectorielle ;
c) lisser la répartition des élongations de l'oscillation, détectée de façon métrologique pour chaque point de mesure ;
d) définir des éléments polygonaux, chaque point de mesure formant un sommet d'au moins un élément ;
e) calculer un état de déformation tensoriel pour chacun des éléments polygonaux à partir des répartitions des élongations de l'oscillation tensorielles présentes aux sommets des éléments ;
f) calculer la répartition des déformations aux sommets des éléments à partir des états de déformation des éléments.

2. Procédé selon la revendication 1, **caractérisé en ce qu'**à l'étape b), la répartition des élongations de l'oscillation vectorielle aux points de mesure est déterminée à l'aide d'un vibromètre à balayage 3D.

3. Procédé selon la revendication 1 ou 2, **caractérisé en ce qu'**à l'étape b), les points de mesure sont répartis de façon équidistante sur le composant.

4. Procédé selon la revendication 1 ou 2, **caractérisé en ce qu'**à l'étape b), les points de mesure dans des zones de composant à gradients de déformation supérieurs sont répartis sur le composant avec un espacement inférieur à celui dans des zones de composant à gradients de déformation inférieurs, la répartition des points de mesure sur le composant étant à cet effet effectuée de façon itérative.

5. Procédé selon une ou plusieurs des revendications 1 à 4, **caractérisé en ce qu'**à l'étape c) le lissage de la répartition des élongations de l'oscillation, détectée de façon métrologique pour chaque point de mesure, est effectué à l'aide d'un lissage spline, en particulier cubique.

6. Procédé selon une ou plusieurs des revendications 1 à 5, **caractérisé en ce qu'**à l'étape d), des éléments triangulaires sont définis.

7. Procédé selon une ou plusieurs des revendications 1 à 6, **caractérisé en ce qu'**à l'étape e) l'état de déformation tensoriel de chaque élément dans le système de coordonnées local de l'élément respectif est calculé.

8. Procédé selon une ou plusieurs des revendications 1 à 7, **caractérisé en ce qu'**à l'étape f) pour calculer la répartition des déformations, les états de déformation tensoriels des éléments, qui sont présents dans un système de coordonnées local de l'élément respectif, sont convertis par une transformation sur les axes principaux du système de coordonnées local de l'élément respectif en déformations principales scalaires, et **en ce qu'**en plus, pour calculer la répartition des déformations pour les sommets des éléments, les déformations principales scalaires sont déterminées aux sommets respectifs, le résultat étant une répartition des déformations scalaire pour les sommets des éléments.

9. Procédé selon une ou plusieurs des revendications 1 à 7, **caractérisé en ce qu'**à l'étape f) pour calculer la répartition des déformations, les états de déformation tensoriels des éléments, qui existent dans un système de coordonnées local de l'élément respectif, sont transformés en un système de coordonnées global, et **en ce qu'**en plus pour calculer la répartition des déformations pour les sommets des éléments, les états de déformation tensoriels transformés sont moyennés aux sommets respectifs, le résultat étant une répartition des déformations tensoriel pour les sommets des éléments.
